# EUROPÄISCHE PATENTANMELDUNG

(11) **EP 3 760 377 A2**
(43) Veröffentlichungstag der Anmeldung: **06.01.2021**
(21) Anmeldenummer: 20164496.0
(22) Anmeldetag: 20.03.2020
(51) Int. Cl.: B25B 11/00, B23Q 3/08

(54) **KONSOLE MIT UNTERDRUCKERZEUGUNGSVORRICHTUNG, FESTHALTEMITTEL MIT UNTERDRUCKERZEUGUNGSVORRICHTUNG SOWIE BEARBEITUNGSMASCHINE MIT DIESEN**

(30) Priorität: 21.03.2019 DE 102019107257
(71) Anmelder: HOMAG Bohrsysteme GmbH, 33442 Herzebrock-Clarholz (DE)
(72) Erfinder: Gringel, Martin, 72479 Straßberg (DE); Tentrup, Markus, 33335 Gütersloh (DE); Düpjohann, Werner, 33442 Herzebrock-Clarholz (DE); Kübler, Jens, 75389 Neuweiler (DE)
(74) Vertreter: Hoffmann Eitle

(57) **Zusammenfassung**

Die Erfindung betrifft eine Konsole mit zumindest einer Unterdruckerzeugungsvorrichtung sowie ein Festhaltemittel (insbesondere einen Vakuumsauger) mit zumindest einer Unterdruckerzeugungsvorrichtung, die beispielsweise zum Halten eines plattenförmigen Werkstücks eingesetzt werden. Ferner betrifft die Erfindung eine Bearbeitungsmaschine mit einer Konsole und/oder einem Festhaltemittel.

## Beschreibung

### Technisches Gebiet

Die Erfindung betrifft eine Konsole mit zumindest einer Unterdruckerzeugungsvorrichtung sowie ein Festhaltemittel (insbesondere einen Vakuumsauger) mit zumindest einer Unterdruckerzeugungsvorrichtung, die beispielsweise zum Halten eines plattenförmigen Werkstücks eingesetzt werden. Ferner betrifft die Erfindung eine Bearbeitungsmaschine mit einer Konsole und/oder einem Festhaltemittel.

Eine solche Bearbeitungsmaschine wird, beispielsweise im Bereich der Möbel- und Bauelementeindustrie, zum Bearbeiten von Werkstücken verwendet, die bevorzugt zumindest abschnittsweise aus Holz, holzhaltigem Werkstoff, Verbundwerkstoff, Kunststoff oder ähnlichem bestehen.

### Stand der Technik

Im Bereich der Holzbearbeitungsmaschinen sind Maschinen mit sogenannten Konsolentischen bzw. Traversentischen bekannt, welche auf dem Maschinenbett der Bearbeitungsmaschine angeordnet sind. Derartige Konsolentische umfassen balkenförmige Konsolen, an denen Festhaltemittel (Vakuumsauger; Blocksauger) positioniert werden können. Die zu haltenden, beispielsweise plattenförmigen Werkstücke werden auf den Festhaltemitteln angeordnet und sind daran fixierbar.

Üblicherweise erstrecken sich die balkenförmigen Konsolen entlang einer ersten Richtung Y und sind in einer zweiten Richtung X des Konsolentisches bzw. Maschinenbetts, die orthogonal zu der ersten Richtung Y ist, mittels eines Linearführungssystems verschiebbar und arretierbar an dem Konsolentisch angeordnet.

Die Festhaltemittel beispielsweise in Form von Vakuumsaugern, Blocksaugern etc. sind auf den Konsolen in deren Erstreckungsrichtung (erste Richtung Y) positionierbar und fixierbar. Dabei ist die Schnittstelle zwischen Konsole und Festhaltemittel jeweils so gestaltet, dass dem Festhaltemittel über die Konsole - mittels geeigneter Ventil- und Verbindungstechnik in der Konsole - Unterdruck zugeführt werden kann.

Hierbei sind die Festhaltemittel üblicherweise so gestaltet, dass über die Konsole zugeführter Unterdruck zum einen so genützt wird, dass das Festhaltemittel durch Unterdruck an der Konsole angepresst und fixiert wird. Zum anderen können die Festhaltemittel ferner so gestaltet sein, dass der über die Konsole zugeführte Unterdruck - mittels geeigneter Ventil- und Verbindungstechnik in dem Festhaltemittel - zu dem plattenförmigen Werkstück geleitet wird, um das Werkstück bzw. einen Abschnitt des Werkstücks mittels Unterdruck an dem Festhaltemittel zu fixieren.

Der hierfür benötigte Unterdruck wird hierbei zentral über eine leistungsstarke Vakuumpumpe erzeugt, welche neben der Bearbeitungsmaschine platziert ist. Diese Vakuumpumpe, welche aufgrund ihrer Größe und Leistungsstärke hohe Schallemissionen aufweist, ist über Unterdruckzuführschläuche bzw. Vakuumschläuche mit der Bearbeitungsmaschine verbunden. Die Bearbeitungsmaschine weist wiederum ein Unterdruckverteilsystem bzw. Vakuumverteilsystem auf, um den Konsolen mittels geeigneter Ventil- und Verbindungstechnik Unterdruck zuzuführen.

Während die eingangs genannten Bearbeitungsmaschinen zwar prinzipiell das Fixieren bzw. Halten von Werkstücken an den Festhaltemitteln bei flexibler Positionierbarkeit der Festhaltemittel an der Konsole ermöglicht, ist deren Einsatz mit einem hohen Aufwand, hohen Kosten und einer geringen Flexibilität verbunden. In diesem Zusammenhang seien insbesondere die Installation und Integration des Unterdruckverteilsystems sowie die Betriebskosten der zentralen leistungsstarken Vakuumpumpe genannt. Ferner genannt seien auch noch die limitierten Möglichkeiten, den von der zentralen leistungsstarken Vakuumpumpe bereitgestellten Unterdruck an den benötigten Unterdruck zum Fixieren des Werkstücks an den Festhaltemitteln anzupassen.

Schlussfolgernd kann gesagt werden, dass der Stand der Technik nur eingeschränkte Möglichkeiten im Hinblick auf eine kosten- und energieeffiziente, geräuscharme und flexible, bedarfsgerechte Unterdruckversorgung in Konsolen, Festhaltemitteln sowie Bearbeitungsmaschinen vorsieht.

### Darstellung der Erfindung

Es ist daher Aufgabe der vorliegenden Erfindung, eine Konsole, ein Festhaltemittel sowie eine Bearbeitungsmaschine vorzusehen, welche eine kosten- und energieeffiziente, geräuscharme und flexible, bedarfsgerechte Unterdruckversorgung von Konsolen und Festhaltemitteln vorsieht.

Erfindungsgemäß wird diese Aufgabe durch eine Konsole mit den Merkmalen des unabhängigen Patentanspruchs 1, ein Festhaltemittel mit den Merkmalen des nebengeordneten Patentanspruchs 9 sowie eine Bearbeitungsmaschine mit den Merkmalen des Patentanspruchs 17 gelöst. Bevorzugte Ausgestaltungen finden sich in den weiteren Ansprüchen.

In der vorliegenden Erfindung bezeichnet der Begriff "Unterdruck" einen Druck, der geringer als ein Druck von 1013 mbar (1,013 bar) ist.

Des Weiteren wird in der vorliegenden Erfindung unter dem Begriff "Vakuum" ein Zustand bezeichnet, in welchem ein Unterdruck vorherrscht.

"Druckdichte Verbindung" bezeichnet eine fluidmäßige Verbindung, über welche ein Druck (u.a. ein Unterdruck) übertragen werden kann. Hierbei bezeichnet "druckdichte Verbindung" nicht notwendigerweise eine durchgehend aufrechterhaltene Verbindung, sondern auch eine fluidmäßige Verbindung die nach Bedarf freigegeben oder unterbrochen sein kann.

Die vorliegende Erfindung stellt eine Konsole für eine Bearbeitungsmaschine zum Bearbeiten von Werkstücken, die vorzugsweise zumindest abschnittsweise aus Holz, holzhaltigem Werkstoff, Verbundwerkstoff oder Kunststoff bestehen bereit. Die Konsole weist eine Oberseite bzw. Auflageseite auf, die zum Aufnehmen von zumindest einem Festhaltemittel bzw. Spannelement (insbesondere Vakuumsauger), auf welchem ein zu fixierendes Werkstück auflegbar ist und vom Festhaltemittel mittels Unterdruck haltbar ist, eingerichtet ist, wobei die Konsole durch auf der Oberseite ausgebildete Kupplungen mit dem zumindest einen Festhaltemittel in druckdichte Verbindung bringbar ist. Erfindungsgemäß weist die Konsole zumindest eine Unterdruckerzeugungsvorrichtung auf, die in druckdichter Verbindung mit den Kupplungen an oder in oder in der Nähe der Konsole angeordnet ist, um das zumindest eine Festhaltemittel mit Unterdruck zu versorgen.

Die Kupplungen sind dabei jeweils so ausgebildet, dass sie eine fluidmäßige Verbindung zum Übertragen eines Drucks (u.a. Unterdrucks) nach Bedarf freigeben oder unterbrechen können. Die Kupplungen können beispielsweise als Tast- oder Magnetventil ausgebildet sein oder Tast- oder Magnetventile aufweisen. Ferner kann die druckdichte Verbindung zwischen der Unterdruckerzeugungsvorrichtung und den Kupplungen durch geeignete Ventil- und Verbindungstechnik vorgesehen sein.

Durch das erfindungsgemäße Anordnen der zumindest einen Unterdruckerzeugungsvorrichtung in druckdichter Verbindung mit den Kupplungen an oder in der Konsole, d.h. das *dezentrale* Anordnen der zumindest einen Unterdruckerzeugungsvorrichtung an oder in der Konsole, kann auf den Einsatz einer *zentralen* (d.h. zentral angeordneten, neben der Bearbeitungsmaschine stehenden) leistungsstarken Vakuumpumpe verzichtet werden. Vorteilhafterweise wird hierdurch der Aufwand für die Installation und Integration eines Unterdruckverteilsystems im Vergleich zu einem System mit einer zentralen leistungsstarken Vakuumpumpe erheblich verringert. So wird beispielsweise der Aufbau der Maschine bzw. der Konsole vereinfacht und die Anzahl der benötigten Komponenten (z.B. Ventile, Schläuche etc.) reduziert, was ferner mit einer erhöhten Zuverlässigkeit der Maschine einhergeht. Ein weiterer Vorteil des dezentralen Anordnens der zumindest einen Unterdruckerzeugungsvorrichtung an oder in der Konsole selbst - anstelle des Einsatzes einer zentralen leistungsstarken Vakuumpumpe - liegt in der deutlich verringerten Schallemission und somit geräuscharmen Unterdruckversorgung.

Ferner ermöglicht die erfindungsgemäße Konsole in besonders vorteilhafter Weise eine flexible, bedarfsgerechte und energieeffiziente Unterdruckversorgung: Durch das Anordnen der zumindest einen Unterdruckerzeugungsvorrichtung an oder in der Konsole kann der von der Konsole bereitgestellte Unterdruck durch Steuern der Leistung der jeweiligen Unterdruckerzeugungsvorrichtung flexibel eingestellt werden. Dabei ist auch ein vollständiges Abschalten der Unterdruckerzeugungsvorrichtung denkbar, wenn kein Bedarf an Unterdruckversorgung vorherrscht.

Somit ist der bereitgestellte Unterdruck flexibel und bedarfsgerecht an den benötigten Unterdruck zum Fixieren des Werkstücks - der z.B. aus der Größe und/oder Geometrie und/oder Gewicht des zu fixierenden Werkstücks resultiert - anpassbar. Hierdurch wird auch eine besonders energieeffiziente Unterdruckversorgung gewährleistet.

Ein weiterer Vorteil des dezentralen Anordnens der zumindest einen Unterdruckerzeugungsvorrichtung an oder in der Konsole liegt auch darin begründet, dass der Einfluss von Anlaufverzögerungen (d.h. die Verzögerungszeit, bis die Unterdruckvorrichtung nach An- bzw. Zuschalten den gewünschten Unterdruck vorsieht) - im Vergleich zu einem System mit einer zentralen leistungsstarken Vakuumpumpe - stark reduziert bzw. eliminiert werden kann.

In einer bevorzugten Ausführungsform weist die Konsole eine balkenförmige Form auf und erstreckt sich entlang einer ersten Richtung Y. Bevorzugt weist die Konsole Führungen auf, die zum Führen von an der Oberseite positionierten bzw. angebrachten Festhaltemitteln entlang der ersten Richtung Y eingerichtet ist.

Gemäß einer bevorzugten Ausführungsform weist die Konsole zumindest eine Führungsvorrichtung auf, die zum Bewegen und Arretieren der Konsole in einer zweiten Richtung X eines Maschinenbetts einer Bearbeitungsmaschine eingerichtet ist. Hierbei ist die zweite Richtung X vorzugsweise orthogonal zu der ersten Richtung Y. Ferner ist die Führungsvorrichtung bevorzugt als Linearführungssystem ausgebildet. In vorteilhafter Weise ermöglicht die Führungsvorrichtung das flexible Positionieren der Konsole und trägt somit zum flexiblen und bedarfsgerechten Vorsehen einer Unterdruckversorgung bei.

Gemäß einer weiteren bevorzugten Ausführungsform ist die Konsole in ein Segment oder eine Vielzahl von Segmenten mit entsprechenden Kupplungen aufgeteilt. Genauer gesagt ist die Konsole in ein Segment oder eine Vielzahl von Segmenten aufgeteilt, wobei jedem Segment entsprechende Kupplungen zugeordnet sind.

Dabei können beispielsweise jedem Segment alle Kupplungen auf der Oberseite ausgebildeten Kupplungen zugeordnet sein. Alternativ kann beispielsweise jedem Segment nur eine oder eine Teilmenge aller auf der Oberseite ausgebildeten Kupplungen zugeordnet sein.

Ferner ist zumindest eine Unterdruckerzeugungsvorrichtung in oder an dem Segment oder der Vielzahl von Segmenten angeordnet. Dabei steht die zumindest eine Unterdruckerzeugungsvorrichtung eines Segments jeweils in druckdichter Verbindung mit den entsprechenden Kupplungen des Segments. Hierdurch wird eine flexible und bedarfsgerechte Unterdruckversorgung der Kupplungen der Konsole gewährleistet.

In dem Fall, dass zwei oder mehrere Segmente in der Konsole ausgebildet sind, kann durch geschicktes Zuordnen von den auf der Oberseite ausgebildeten Kupplungen zu den zwei oder mehreren Segmenten, in oder an welchen jeweils zumindest eine Unterdruckerzeugungsvorrichtung angeordnet ist, jede Kupplung mit zumindest zwei Unterdruckerzeugungsvorrichtungen in druckdichte Verbindung gebracht werden. Hierdurch wird eine besonders flexible und bedarfsgerechte Unterdruckversorgung der Kupplungen der Konsole gewährleistet, da Festhaltemittel an der Oberfläche der Konsole beispielsweise bei Bedarf über die Kupplungen durch zwei Unterdruckerzeugungsvorrichtungen versorgt werden können.

In einer bevorzugten Weiterbildung ist zumindest ein Luftauslassanschluss in der Konsole ausgebildet, der mit der zumindest einen Unterdruckerzeugungsvorrichtung in Verbindung steht und zum Abführen von erzeugter Abluft der zumindest einen Unterdruckerzeugungsvorrichtung eingerichtet ist. Auf diese Weise kann die erzeugte Abluft der dezentral angeordneten Unterdruckerzeugungsvorrichtung in vorteilhafter Weise genützt werden, um zusätzliche Funktionen an der Konsole oder der Bearbeitungsmaschine (wie z.B. Versorgen von Pneumatikaktoren, Bereitstellen von Druckluft zum Ablasen/Reinigen der Bearbeitungsmaschine) vorzusehen. Insbesondere vorteilhaft ist dabei auch, dass der Installations- und Integrationsaufwand sowie die Kosten für ein Überdruckverteilsystem bzw. pneumatisches Verteilsystem durch die Nutzung der erzeugten Abluft mittels des ausgebildeten Luftauslassanschlusses in der Konsole erheblich reduziert werden.

In einer weiteren bevorzugten Ausführungsform ist die zumindest eine Unterdruckerzeugungsvorrichtung eine elektrische Vakuumpumpe. Die eingesetzte elektrische Vakuumpumpe bzw. eingesetzten elektrischen Vakuumpumpen zeichnet/zeichnen sich durch einfache elektrische Steuerbarkeit bzw. Ansteuerbarkeit mit geringen Totzeiten und minimalen Installationsaufwand aus. Insbesondere bevorzugt kommen hierbei elektrische Vakuumpumpen zum Einsatz, welche jeweils im Vergleich zu den eingangs genannten, zentralen leistungsstarken Vakuumpumpen des Stands der Technik eine kleinere Größe, einen geringeren Energiebedarf und eine geringere Schallemission im Betrieb aufweisen. Durch den Einsatz elektrischer Vakuumpumpen als Unterdruckerzeugungsvorrichtung kann das dezentrale Anordnen der zumindest einen Unterdruckerzeugungsvorrichtung an oder in der Konsole besonders einfach und kostengünstig realisiert werden um somit die kosten- und energieeffiziente, geräuscharme und flexible, bedarfsgerechte Unterdruckversorgung von Konsolen und Festhaltemitteln zu gewährleisten.

Gemäß einer bevorzugten Ausführungsform ist die Konsole so gestaltet, dass die Leistung der zumindest einen Unterdruckerzeugungsvorrichtung zum Einstellen des Unterdrucks gesteuert werden kann. Die Steuerung kann durch eine in der Konsole oder in der Bearbeitungsmaschine vorgesehene Steuereinheit erfolgen.

Hierdurch kann der bereitgestellte Unterdruck auf besonders einfache Weise flexibel und bedarfsgerecht an den benötigten Unterdruck zum Fixieren des Werkstücks angepasst werden.

Insbesondere kann durch geschicktes druckdichtes Verbinden von mehreren Unterdruckerzeugungsvorrichtungen an oder in der Konsole mit den Kupplungen, über welche die Festhaltemittel mit Unterdruck versorgt werden, im Zusammenspiel mit dem Steuern der Leistung eine besonders flexible und bedarfsgerechte Unterdruckversorgung sichergestellt werden. Hierbei kann durch Steuern (der Leistung) dieser mehreren, geschickt verbundenen und zusammen wirkenden Unterdruckerzeugungsvorrichtungen der bereitgestellte Unterdruck selbst bei Unterdruck-Bedarfsspitzen besonders effektiv gewährleistet werden.

Bevorzugterweise ist Konsole so gestaltet, dass sie von einer zentralen Steuereinheit der Maschine steuerbar ist. Auf diese Weise kann, u.a. bei Vorhandensein mehrerer Konsolen, jede Konsole und deren zumindest eine Unterdruckerzeugungsvorrichtung zentral gesteuert werden, wodurch die flexible und bedarfsgerechte Unterdruckversorgung aller Konsolen in der Bearbeitungsmaschine sichergestellt wird.

Gemäß einer weiteren bevorzugten Ausführungsform ist die zumindest eine Unterdruckerzeugungsvorrichtung der Konsole über eine Verbindung, insbesondere Schlauchverbindung, zum Leiten von Unterdruck mit einer oder mehreren weiteren Konsolen verbindbar. Dabei ist diese Verbindung bevorzugt so gestaltet, dass der von der zumindest einen Unterdruckerzeugungsvorrichtung erzeugte Unterdruck gezielt zwischen der Konsole und der/den weiteren Konsole/n steuerbar ist.

Hierdurch kann der erzeugte Unterdruck zwischen der Konsole und der/den weiteren Konsole/n gezielt verteilt werden, und somit flexibel und bedarfsgerecht an den benötigten Unterdruck zum Fixieren des Werkstücks angepasst werden. Hierdurch kann eine besonders flexible und bedarfsgerechte Unterdruckversorgung selbst bei Unterdruck-Bedarfsspitzen, insbesondere bei lokalen Unterdruck-Bedarfsspitzen an einzelnen Konsolen, besonders effektiv gewährleistet werden.

Bevorzugterweise wird die vorgenannte Verbindung, insbesondere Schlauchverbindung, von der zentralen Steuereinheit der Maschine gesteuert, wodurch die flexible und bedarfsgerechte Unterdruckversorgung aller Konsolen in der Bearbeitungsmaschine sichergestellt wird.

In einer weiteren bevorzugten Ausführungsform weist die Konsole zumindest einen Unterdruckspeicher auf, in dem ein Unterdruck mittels der zumindest einen Unterdruckerzeugungsvorrichtung aufbringbar ist. Der zumindest eine Unterdruckspeicher ist so gestaltet, dass er den aufgebrachten Unterdruck speichert. Ferner ist der Unterdruckspeicher an oder in oder in der Nähe der Konsole angeordnet und in druckdichte Verbindung mit den Kupplungen bringbar, um das zumindest eine Festhaltemittel mit Unterdruck zu versorgen.

Auf diese Weise kann das Reaktionsverhalten der Konsole drastisch verkürzt werden, da durch zusätzliches Vorsehen des Unterdruckspeichers bei Bedarf ein Unterdruck direkt von dem Unterdruckspeicher vorgesehen werden kann. Auf diese Weise kann der Einfluss von Anlaufverzögerungen von Unterdruckvorrichtungen noch weiter reduziert bzw. sogar eliminiert werden.

In einer weiteren Zielsetzung stellt die vorliegende Erfindung ein Festhaltemittel bzw. Spannelement, insbesondere Vakuumsauger, zum Halten eines Werkstücks für eine Bearbeitungsmaschine zum Bearbeiten von Werkstücken, die vorzugsweise zumindest abschnittsweise aus Holz, holzhaltigem Werkstoff, Verbundwerkstoff oder Kunststoff bestehen, bereit. Das Festhaltemittel umfasst eine erste Seite, die dem zu fixierenden Werkstück zugewandt ist. Die erste Seite weist eine erste Spannfläche auf, auf der zumindest ein Abschnitt des zu fixierendes Werkstücks auflegbar und mittels Unterdruck haltbar ist. Ferner umfasst das Festhaltemittel eine zweite Seite, die eine zweite Spannfläche aufweist, über welche das Festhaltemittel an einer Konsole der Bearbeitungsmaschine anbringbar ist. Erfindungsgemäß weist das Festhaltemittel zumindest eine Unterdruckerzeugungsvorrichtung auf, die an oder in dem Festhaltemittel angeordnet ist.

Durch das erfindungsgemäße Anordnen der zumindest einen Unterdruckerzeugungsvorrichtung in oder an dem Festhaltemittel, d.h. das *dezentrale* Anordnen der zumindest einen Unterdruckerzeugungsvorrichtung an oder in dem Festhaltemittel, kann auf den Einsatz einer *zentralen* leistungsstarken Vakuumpumpe verzichtet werden. Vorteilhafterweise wird hierdurch der Aufwand für die Installation und Integration eines Unterdruckverteilsystems im Vergleich zu einem System mit einer zentralen leistungsstarken Vakuumpumpe erheblich verringert. Durch das das *dezentrale* Anordnen der zumindest einen Unterdruckerzeugungsvorrichtung an oder in dem Festhaltemittel selbst kann der der Aufbau der Bearbeitungsmaschine bzw. der Konsole vereinfacht und die Anzahl der benötigten Komponenten (z.B. Ventile, Schläuche etc.) reduziert werden, was ferner mit einer erhöhten Zuverlässigkeit der Maschine einhergeht. Ein weiterer Vorteil des dezentralen Anordnens der zumindest einen Unterdruckerzeugungsvorrichtung an oder in dem Feststellmittel selbst - anstelle des Einsatzes einer zentralen leistungsstarken Vakuumpumpe - liegt in der deutlich verringerten Schallemission und somit geräuscharmen Unterdruckversorgung.

Ferner ermöglicht das erfindungsgemäße Festhaltemittel in besonders vorteilhafter Weise eine flexible, bedarfsgerechte und energieeffiziente Unterdruckversorgung: Durch das Anordnen der zumindest einen Unterdruckerzeugungsvorrichtung an oder in dem Festhaltemittel kann der zum Fixieren des Werkstücks bereitgestellte Unterdruck des Festhaltemittels durch Steuern der Leistung der jeweiligen Unterdruckerzeugungsvorrichtung flexibel eingestellt werden. Dabei ist auch ein vollständiges Abschalten der Unterdruckerzeugungsvorrichtung denkbar, wenn kein Bedarf an Unterdruckversorgung vorherrscht.

Somit ist der bereitgestellte Unterdruck flexibel und bedarfsgerecht an den benötigten Unterdruck zum Fixieren des Werkstücks - der z.B. aus der Größe und/oder Geometrie und/oder Gewicht des zu fixierenden Werkstücks resultiert - anpassbar. Hierdurch wird auch eine besonders energieeffiziente Unterdruckversorgung gewährleistet.

Ein weiterer Vorteil des dezentralen Anordnens der zumindest einen Unterdruckerzeugungsvorrichtung an oder in dem Festhaltemittel liegt auch darin begründet, dass der Einfluss von Anlaufverzögerungen (d.h. die Verzögerungszeit, bis die Unterdruckvorrichtung nach An- bzw. Zuschalten den gewünschten Unterdruck vorsieht) - im Vergleich zu einem System mit einer zentralen leistungsstarken Vakuumpumpe - stark reduziert bzw. eliminiert werden kann.

In einer bevorzugten Weiterbildung des Festhaltemittels kann die zumindest eine Unterdruckerzeugungsvorrichtung durch zumindest eine an der ersten Spannfläche ausgebildete Verbindungsstelle mit zumindest einem Abschnitt des Werkstücks in druckdichte Verbindung gebracht werden, um den Abschnitt des Werkstücks mittels Unterdruck zu fixieren.

Bevorzugterweise kann das Festhaltemittel - mittels geeigneter Ventil- und Verbindungstechnik in dem Festhaltemittel - über die erste Spannfläche mit zumindest einem Abschnitt des zu fixierenden Werkstücks in druckdichte Verbindung gebracht werden. Somit kann ein aufliegender Abschnitt des zu fixierenden Werkstücks durch Vorsehen eines Unterdrucks an dem Festhaltemittel bzw. an der ersten Spannfläche des Festhaltemittels fixiert werden. Auf diese Weise kann das Festhaltemittel auf besonders einfache Weise eine flexible, bedarfsgerechte und energieeffiziente Unterdruckversorgung zum Fixieren von Werkstücken vorsehen.

Bevorzugterweise ist die an der ersten Spannfläche ausgebildete Verbindungsstelle als Tastventil ausgebildet. Hierbei ist das Tastventil vorzugsweise so gestaltet, dass es eine Belegung der ersten Spannfläche des Festhaltemittels mit einem Werkstück bzw. Werkstückabschnitt detektiert, und bei ebensolcher Detektion öffnet, um einen Unterdruck zwischen Festhaltemittel und Werkstück vorzusehen.

In einer bevorzugten Weiterbildung des Festhaltemittels kann die zumindest eine Unterdruckerzeugungsvorrichtung durch zumindest eine an der zweiten Spannfläche ausgebildete Verbindungsstelle mit der Konsole in druckdichte Verbindung gebracht werden, um das Festhaltemittel mittels Unterdruck an der Konsole zu fixieren.

Bevorzugterweise kann das Festhaltemittel - mittels geeigneter Ventil- und Verbindungstechnik in dem Festhaltemittel - über die zweite Spannfläche an einer Oberfläche der Konsole der Bearbeitungsmaschine angebracht werden und durch Vorsehen eines Unterdrucks zwischen Festhaltemittel und Konsole an der Konsole fixiert und positioniert werden. Hierbei ist die an der zweiten Spannfläche ausgebildete Verbindungsstelle vorzugsweise als schaltbares Ventil, zum Beispiel Magnetventil ausgebildet oder weist ein schaltbares Ventil auf. Vorteilhafterweise wird hierdurch der Aufwand für die Installation und Integration eines Unterdruckverteilsystems im Vergleich zu einem System mit einer zentralen leistungsstarken Vakuumpumpe zusätzlich verringert bzw. beseitigt. Des Weiteren ist das Festhaltemittel auf diese Weise flexibler positionierbar, da es nicht auf eine bearbeitungsmaschinenseitige oder konsolenseitige Unterdruckversorgung angewiesen ist.

Vorzugsweise ist das schaltbare Ventil so gestaltet, dass es einen Kontakt der zweiten Spannfläche des Festhaltemittels mit der Oberfläche der Konsole detektiert, und bei ebensolcher Detektion öffnet, um einen Unterdruck zwischen Festhaltemittel und Konsole vorzusehen.

Gemäß einer weiteren bevorzugten Ausführungsform weist das Festhaltemittel ferner einen Unterdruckspeicher auf, in dem ein Unterdruck mittels der zumindest einen Unterdruckerzeugungsvorrichtung aufbringbar ist und der so gestaltet ist, dass er den aufgebrachten Unterdruck speichert. Dabei ist der Unterdruckspeicher durch zumindest eine an der ersten Spannfläche ausgebildete Verbindungsstelle mit zumindest einem Abschnitt des Werkstücks in druckdichte Verbindung bringbar, um den Abschnitt des Werkstücks mittels Unterdruck zu fixieren. Auf diese Weise kann der Unterdruckspeicher - mittels geeigneter Ventil- und Verbindungstechnik in dem Festhaltemittel - über die erste Spannfläche mit zumindest einem Abschnitt des zu fixierenden Werkstücks in druckdichte Verbindung gebracht werden. Somit kann ein aufliegender Abschnitt des zu fixierenden Werkstücks durch Vorsehen eines Unterdrucks an dem Festhaltemittel bzw. an der ersten Spannfläche des Festhaltemittels fixiert werden.

Auf diese Weise kann das Reaktionsverhalten des Feststellmittels drastisch verkürzt werden, da durch zusätzliches Vorsehen des Unterdruckspeichers bei Bedarf ein Unterdruck zwischen Festhaltemittel und Werkstück und/oder Festhaltemittel und Konsole unmittelbar und direkt von dem Unterdruckspeicher vorgesehen werden kann. Auf diese Weise kann der Einfluss von Anlaufverzögerungen von Unterdruckvorrichtungen noch weiter reduziert bzw. sogar eliminiert werden. Des Weiteren kann in dem Festhaltemittel durch den Unterdruckspeicher selbst bei Energieausfall ein Unterdruck zwischen Festhaltemittel und Werkstück und/oder Festhaltemittel und Konsole vorgesehen werden, so dass ein Ablösen bzw. Abtrennen verhindert wird und die Betriebszuverlässigkeit erhöht wird.

Bevorzugt sind die an der ersten Spannfläche ausgebildete Verbindungsstellen sowohl mit der Unterdruckerzeugungsvorrichtung als auch dem Unterdruckspeicher verbunden, so dass sowohl über die Unterdruckerzeugungsvorrichtung als auch über den Unterdruckspeicher ein Unterdruck zwischen Festhaltemittel und Werkstück vorsehbar ist. Ferner bevorzugt sind die an der zweiten Spannfläche ausgebildete Verbindungsstellen sowohl mit der Unterdruckerzeugungsvorrichtung als auch dem Unterdruckspeicher verbunden, so dass sowohl über die Unterdruckerzeugungsvorrichtung als auch über den Unterdruckspeicher ein Unterdruck zwischen Festhaltemittel und Konsole vorsehbar ist.

In einer weiteren Ausführungsform weist das Festhaltemittel eine Schnittstelle auf, die zum Versorgen der zumindest einen Unterdruckerzeugungsvorrichtung mit Energie und/oder Steuerinformation eingerichtet ist. Hierbei ist die Schnittstelle vorzugsweise an der zweiten Seite ausgebildet und so gestaltet, dass sie über die Konsole mit Energie und/oder Steuerinformation versorgt werden kann.

Auf diese Weise kann der Unterdruckerzeugungsvorrichtung auf besonders einfache Weise mit Energie und/oder Steuerinformation über die Konsole versorgt werden. Ferner wird hierdurch die flexible Positionierbarkeit des Festhaltemittels an der Konsole der Bearbeitungsmaschine gewährleistet.

Gemäß einer weiteren Ausführungsform weist das Festhaltemittel einen Energiespeicher (bevorzugt einen elektrischen Energiespeicher wie z.B. einen Akkumulator) zum Versorgen der zumindest einen Unterdruckerzeugungsvorrichtung mit Energie auf. Ferner umfasst das Festhaltemittel eine Schnittstelle, die in dem Festhaltemittel ausgebildet ist und über welche dem Energiespeicher Energie zugeführt werden kann.

Auf diese Weise wird der Aufwand zum Installieren und Integrieren des Festhaltemittels zum Vorsehen von Unterdruck auf ein Minimum reduziert. Insbesondere fungiert das Festhaltemittel auf diese Weise als von der Bearbeitungsmaschine oder Konsole autarke Einheit, da das Festhaltemittel sowohl die zumindest eine Unterdruckerzeugungsvorrichtung zum Vorsehen von Unterdruck, als auch den Energiespeicher zum Betreiben der zumindest einen Unterdruckerzeugungsvorrichtung aufweist. Somit ist das Festhaltemittel flexibler positionierbar, da es nicht auf eine bearbeitungsmaschinenseitige oder konsolenseitige Energieversorgung angewiesen ist.

In einer bevorzugten Weiterbildung ist zumindest ein Luftauslassanschluss in dem Festhaltemittel ausgebildet, der mit der zumindest einen Unterdruckerzeugungsvorrichtung in Verbindung steht und zum Abführen von erzeugter Abluft der zumindest einen Unterdruckerzeugungsvorrichtung eingerichtet ist. Auf diese Weise kann die erzeugte Abluft der dezentral angeordneten Unterdruckerzeugungsvorrichtung in vorteilhafter Weise genützt werden, um zusätzliche Funktionen an dem Festhaltemittel, der Konsole oder der Bearbeitungsmaschine (wie z.B. Versorgen von Pneumatikaktoren, Bereitstellen von Druckluft zum Ablasen/Reinigen der Bearbeitungsmaschine) vorzusehen. Insbesondere vorteilhaft ist dabei auch, dass der Installations- und Integrationsaufwand sowie die Kosten für ein Überdruckverteilsystem bzw. pneumatisches Verteilsystem durch die Nutzung der erzeugten Abluft mittels des ausgebildeten Luftauslassanschlusses in dem Festhaltemittel erheblich reduziert werden.

In einer weiteren bevorzugten Ausführungsform des Festhaltemittels ist die zumindest eine Unterdruckerzeugungsvorrichtung eine elektrische Vakuumpumpe. Die eingesetzte elektrische Vakuumpumpe bzw. eingesetzten elektrischen Vakuumpumpen zeichnet/zeichnen sich durch einfache elektrische Steuerbarkeit bzw. Ansteuerbarkeit mit geringen Totzeiten und minimalen Installationsaufwand aus. Insbesondere bevorzugt kommen hierbei elektrische Vakuumpumpen zum Einsatz, welche jeweils im Vergleich zu den eingangs genannten, zentralen leistungsstarken Vakuumpumpen des Stands der Technik eine kleinere Größe, einen geringeren Energiebedarf und eine geringere Schallemission im Betrieb aufweisen. Durch den Einsatz elektrischer Vakuumpumpen als Unterdruckerzeugungsvorrichtung kann das dezentrale Anordnen der zumindest einen Unterdruckerzeugungsvorrichtung an oder in dem Feststellmittel besonders einfach und kostengünstig realisiert werden um somit die kosten- und energieeffiziente, geräuscharme und flexible, bedarfsgerechte Unterdruckversorgung zum Fixieren von Werkstücken an dem Feststellmittel vorzusehen.

In einer weiteren Zielrichtung stellt die vorliegende Erfindung eine Bearbeitungsmaschine zum Bearbeiten von Werkstücken, die vorzugsweise zumindest abschnittsweise aus Holz, holzhaltigem Werkstoff, Verbundwerkstoff oder Kunststoff bestehen, bereit. Dabei weist die Bearbeitungsmaschine zumindest eine Konsole nach einer der zuvor beschriebenen Ausführungsformen und/oder zumindest ein Festhaltemittel nach einer der zuvor beschriebenen Ausführungsformen auf. Insbesondere weist die Bearbeitungsmaschine der vorliegenden Erfindung alle Vorteile der Konsole und/oder des Festhaltemittels auf.

### Kurze Beschreibung der Zeichnung

Die Erfindung wird im folgenden Abschnitt anhand von Ausführungsbeispielen unter Bezugnahme auf die beiliegenden Figuren der Zeichnung näher erläutert.
- Figur 1: zeigt eine Konsole gemäß einer Ausführungsform der Erfindung
- Figur 2: zeigt eine Bearbeitungsmaschine mit mehreren Konsolen und mehreren Festhaltemitteln
- Figur 3: zeigt ein Festhaltemittel gemäß einer weiteren Ausführungsform der Erfindung

### Detaillierte Beschreibung der bevorzugten Ausführungsformen

Nachfolgend werden anhand der beigefügten Figuren bevorzugte Ausführungsformen der Erfindung im Detail beschrieben. Weitere in diesem Zusammenhang genannte Modifikationen bestimmter Einzelmerkmale können jeweils einzeln miteinander kombiniert werden, um weitere Ausführungsformen der Erfindung auszubilden.

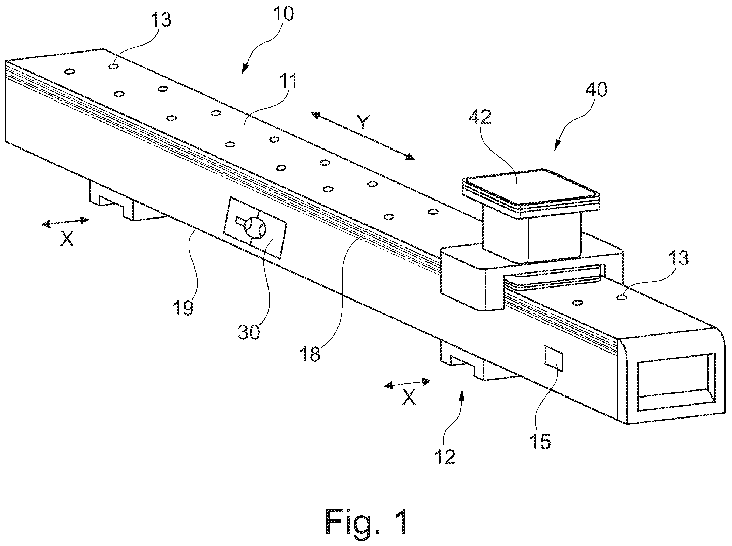

Die in Figur 1 dargestellte Konsole 10 ist Teil eines Bearbeitungstisches einer Bearbeitungsmaschine 1000.

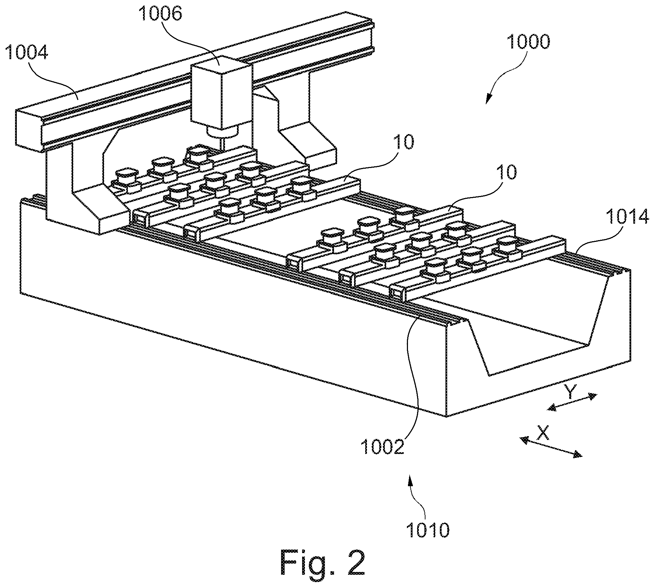

Die in Figur 2 dargestellte Bearbeitungsmaschine 1000 umfasst ein Maschinenbett 1010 mit einem Konsolentisch 1012. Der Konsolentisch 1012 ist mit konsolentischseitigen Führungen 1014 für mehrere Konsolen 10 versehen. Die Konsolen können entlang der Führungen 1014 in einer translatorischen Richtung, hierin als zweite Richtung X bezeichnet, bewegt werden.

Ferner sind am Maschinenbett 1010 weitere Führungen 1002 für ein Portal 1004 angebracht. Entlang des Portals 1004 kann ein Bearbeitungsaggregat 1006 bewegt werden. Mit dem Bearbeitungsaggregat 1006 kann beispielsweise eine Fräs- oder Bohrbearbeitung an einem Werkstück durchgeführt werden.

Nachfolgend wird eine Konsole 10 anhand der in Figur 1 dargestellten Ansicht weiter erläutert.
Wie in Figur 1 dargestellt, weist die Konsole 10 eine balkenförmige Form auf und erstreckt sich entlang einer ersten Richtung Y. Die Konsole kann mittels einer an der Unterseite 19 der Konsole ausgebildeten Führungsvorrichtung 12 in der zweiten Richtung X entlang der Führungen 102 der Bearbeitungsmaschine 1000 translatorisch geführt und arretiert werden.

Ferner umfasst die Konsole 10 eine Oberseite bzw. Auflageseite 11, an der ein Festhaltemittel in der Form eines herkömmlichen, nicht erfindungsgemäßen Vakuumsaugers 40 positioniert ist. Die Konsole 10 umfasst eine Führung 18, an welcher an der Oberseite 11 positionierte bzw. angebrachte Vakuumsauger entlang der ersten Richtung Y translatorisch geführt werden können.

An der Konsole 10 können auch mehrere Vakuumsauger vorgesehen sein (beispielsweise 2, 3 oder mehr Vakuumsauger). Der eine bzw. die mehreren Vakuumsauger 40 können an der Oberseite 13 der Konsole entlang der Erstreckungsrichtung bzw. ersten Richtung Y der Konsole angeordnet werden. Obwohl in dieser Ausführungsform nicht beschrieben, kann selbstverständlich kann auch ein erfindungsgemäßes Festhaltemittel, insbesondere Vakuumsauger an der Konsole 10 positioniert sein. Zur besseren Übersicht ist in Figur 1 allerdings lediglich ein einzelner, nicht erfindungsgemäßer Vakuumsauger 40 an der Konsole 10 dargestellt.

An der Oberseite 11 der Konsole ist eine Vielzahl von Kupplungen 13 ausgebildet. Die Vielzahl von Kupplungen 13 sind jeweils so gestaltet, dass sie mittels eines Magnetventils eine fluidmäßige Verbindung zum Übertragen eines Drucks (u.a. Unterdrucks) freigeben oder unterbrechen können.

Des Weiteren ist eine Unterdruckerzeugungsvorrichtung in Form einer elektrischen Vakuumpumpe 30 in einem Innenraum der Konsole angeordnet. Es sei angemerkt, dass die elektrische Vakuumpumpe 30 in Figur 1 lediglich symbolhaft dargestellt ist. Hierbei stellt der Innenraum ein Segment dar. Die elektrische Vakuumpumpe 30 steht mittels geeigneter Ventil- und Verbindungstechnik (nicht dargestellt) mit der Vielzahl von Kupplungen 13 auf der Oberseite der Konsole in druckdichter Verbindung. Ferner wird die elektrische Vakuumpumpe über die Bearbeitungsmaschine 1000 mit Strom versorgt (nicht dargestellt). Obgleich in dieser Ausführungsform nicht dargelegt, kann die elektrische Vakuumpumpe 30 auch an der Konsole oder in der Nähe der Konsole vorgesehen sein.

Die Leistung der elektrischen Vakuumpumpe 30 der Konsole zum Einstellen eines Unterdrucks wird über eine zentrale Steuereinheit (nicht dargestellt) der Bearbeitungsmaschine 1000 gesteuert. Die hierfür nötige Steuerinformation wird über eine nicht dargestellte Schnittstelle zwischen Bearbeitungsmaschine und Konsole übermittelt. Auf diese Weise kann, u.a. bei Vorhandensein mehrerer Konsolen, jede Konsole und deren zumindest eine Unterdruckerzeugungsvorrichtung zentral gesteuert werden, wodurch die flexible und bedarfsgerechte Unterdruckversorgung aller Konsolen in der Bearbeitungsmaschine sichergestellt wird.

Wie obenstehend erwähnt, wird die Leistung der elektrischen Vakuumpumpe 30 zum Einstellen des Unterdrucks gesteuert. Der erzeugte Unterdruck wird über druckdichte Verbindungen zu der Vielzahl von Kupplungen 13 auf der Oberseite geleitet.

Der in Figur 1 dargestellte Vakuumsauger 40 ist an der Oberfläche 11 der Konsole 10 positioniert und steht mit zumindest einer Kupplung (beispielsweise mit einer, zwei oder mehr Kupplungen) der Vielzahl von Kupplungen in druckdichter Verbindung. Die Konsole 10 ist hierfür so gestaltet, dass sie die Anwesenheit des Vakuumsaugers 40 erfasst und die zumindest Kupplung öffnet, um eine fluidmäßige Verbindung zum Übertragen des Unterdrucks zwischen elektrischer Vakuumpumpe 30 und Vakuumsauger 40 freizugeben.

Im Betrieb der Konsole 10 (bzw. im Betrieb der Bearbeitungsmaschine 1000) erzeugt die elektrische Vakuumpumpe 30 einen Unterdruck zum Fixieren eines Werkstücks an dem Vakuumsauger 40. Der erzeugte Unterdruck wird über die zumindest eine (geöffnete) Kupplung 13 zu dem Vakuumsauger 40 geleitet.

Der Vakuumsauger 40 ist so gestaltet, dass der über die Konsole zugeführte Unterdruck so genützt wird, dass der Vakuumsauger durch den Unterdruck an der Konsole angepresst und fixiert wird.

Ferner ist der Vakuumsauger 40 so gestaltet, dass der über die Konsole zugeführte Unterdruck - mittels geeigneter Ventil- und Verbindungstechnik in dem Vakuumsauger 40 - zu einem zu fixierenden Werkstück an der Oberseite 42 des Vakuumsaugers 40 geleitet wird, um das Werkstück bzw. einen Abschnitt des Werkstücks mittels Unterdruck an dem Festhaltemittel zu fixieren.

Ferner ist ein Luftauslassanschluss 15 in der Konsole ausgebildet, der mit der elektrischen Vakuumpumpe 30 in Verbindung steht, so dass die erzeugte Abluft der elektrischen Vakuumpumpe abgeführt werden kann. Auf diese Weise kann die erzeugte Abluft der elektrischen Vakuumpumpe genützt werden, um zusätzliche Funktionen an der Konsole oder der Bearbeitungsmaschine (wie z.B. Versorgen von Pneumatikaktoren, Bereitstellen von Druckluft zum Ablasen/Reinigen der Bearbeitungsmaschine) vorzusehen.

Obgleich in dieser Ausführungsform nicht dargelegt, können die elektrischen Vakuumpumpen 30 mehrerer Konsolen über eine Verbindung, insbesondere Schlauchverbindung, verbunden sein, so dass der von den elektrischen Vakuumpumpen 30 erzeugte Unterdruck gezielt zwischen den Konsolen verteilbar ist.

Ferner kann, auch wenn im Rahmen dieser Ausführungsform nicht dargelegt, ein Unterdruckspeicher an oder in oder in der Nähe der Konsole angeordnet sein, der in druckdichte Verbindung mit den Kupplungen bringbar ist.

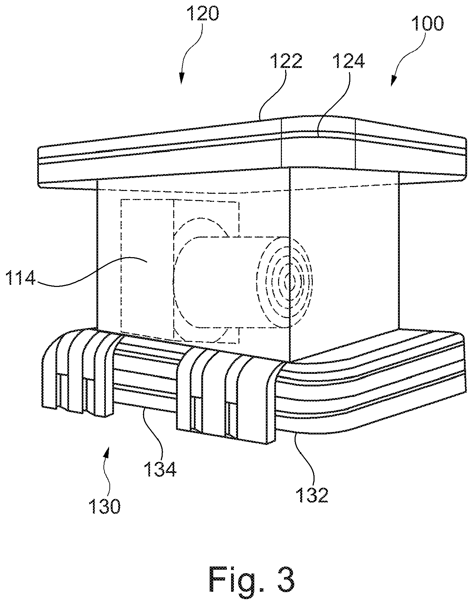

Figur 3 zeigt ein Festhaltemittel gemäß einer weiteren Ausführungsform der Erfindung.

Das Festhaltemittel 100 ist hierbei als Vakuumsauger ausgebildet. Der Vakuumsauger 100 umfasst eine erste Seite 120, die einem zu fixierenden Werkstück zugewandt ist. Die erste Seite weist eine erste Spannfläche 122 auf, auf der zumindest ein Abschnitt des zu fixierendes Werkstücks auflegbar und mittels Unterdruck haltbar ist. Ferner umfasst das Festhaltemittel eine zweite Seite 130, die eine zweite Spannfläche 132 aufweist, über welche das Festhaltemittel an einer Konsole der Bearbeitungsmaschine 1000 anbringbar ist.

Des Weiteren ist eine elektrische Vakuumpumpe 114 in einem Innenraum des Vakuumsaugers 100 angeordnet.

Ferner ist ein Energiespeicher in Form eines Akkumulators (nicht dargestellt) in dem Innenraum des Vakuumsaugers angeordnet, um die elektrische Vakuumpumpe 114 mit Strom zu versorgen. Dem Akkumulator kann über eine Schnittstelle (nicht dargestellt), die in dem Vakuumsauger ausgebildet ist, Strom zugeführt werden, um den Akkumulator zu laden.

Die Leistung der elektrischen Vakuumpumpe 114 des Vakuumsaugers zum Einstellen eines Unterdrucks wird über eine zentrale Steuereinheit (nicht dargestellt) der Bearbeitungsmaschine 1000 gesteuert. Die hierfür nötige Steuerinformation wird über eine nicht dargestellte Schnittstelle zwischen Konsole und Vakuumsauger übermittelt.

An der ersten Spannfläche 122 ist zumindest eine (zum Beispiel eine, zwei oder mehr) Verbindungsstelle 124 ausgebildet. Die elektrische Vakuumpumpe 114 steht in druckdichter Verbindung mit der zumindest einen Verbindungsstelle 124. Mittels geeigneter Ventil- und Verbindungstechnik in dem Vakuumsauger 100 kann die elektrische Vakuumpumpe 114 über die zumindest eine Verbindungsstelle 124 mit zumindest einem Abschnitt des zu fixierenden Werkstücks in druckdichte Verbindung gebracht werden. Somit kann ein aufliegender Abschnitt des zu fixierenden Werkstücks durch Vorsehen eines Unterdrucks an der ersten Spannfläche 122 des Vakuumsaugers fixiert werden.

Hierbei ist die an der ersten Spannfläche 122 ausgebildete Verbindungsstelle 124 als Tastventil ausgebildet. Das Tastventil ist so gestaltet, dass es eine Belegung der ersten Spannfläche des Vakuumsaugers mit einem Werkstück bzw. Werkstückabschnitt detektiert, und bei ebensolcher Detektion öffnet, um eine fluidmäßige Verbindung zum Übertragen von Unterdruck zwischen elektrischer Vakuumpumpe 114 und Werkstück freizugeben.

An der zweiten Spannfläche 132 ist zumindest eine (zum Beispiel eine, zwei oder mehr) Verbindungsstelle 134 ausgebildet. Die elektrische Vakuumpumpe 114 steht in druckdichter Verbindung mit der zumindest einen Verbindungsstelle 134. Mittels geeigneter Ventil- und Verbindungstechnik in dem Vakuumsauger 100 kann die elektrische Vakuumpumpe 114 über die zumindest eine Verbindungsstelle 134 mit der Oberfläche der Konsole der Bearbeitungsmaschine in druckdichte Verbindung gebracht werden.

Hierbei ist die an der zweiten Spannfläche 132 ausgebildete Verbindungsstelle 134 als schaltbares Magnetventil ausgebildet. Der Vakuumsauger 100 ist so gestaltet, dass er das Magnetventil öffnet, um eine fluidmäßige Verbindung zum Übertragen des Unterdrucks zwischen der elektrischer Vakuumpumpe 114 und der Oberfläche der Konsole freizugeben. Somit kann der Vakuumsauger durch Vorsehen eines Unterdrucks an der Konsole fixiert und positioniert werden.

Wie obenstehend erwähnt, wird die Leistung der elektrischen Vakuumpumpe 114 zum Einstellen des Unterdrucks gesteuert. Der erzeugte Unterdruck wird über druckdichte Verbindungen zu der zumindest einen Verbindungsstelle 124 an der der ersten Spannfläche 122 geleitet.

Im Betrieb des Vakuumsaugers 100 erzeugt die elektrische Vakuumpumpe 114 einen Unterdruck zum Fixieren eines Werkstücks an der der ersten Spannfläche 122 des Vakuumsaugers 100. Die Verbindungsstelle bzw. Tastventil 124 detektiert eine Belegung der ersten Spannfläche des Vakuumsaugers mit einem Werkstück bzw. Werkstückabschnitt, und öffnet bei ebensolcher Detektion, um eine fluidmäßige Verbindung zum Übertragen von Unterdruck zwischen elektrischer Vakuumpumpe 114 und Werkstück freizugeben. Somit wird der erzeugte Unterdruck von der elektrischen Vakuumpumpe 114 über das zumindest eine (geöffnete) Tastventil zu dem Werkstück geleitet. Demzufolge kann ein Werkstück bzw. Werkstückabschnitt an der ersten Spannfläche fixiert werden.

Wie obenstehend erwähnt, wird der erzeugte Unterdruck des Vakuumsaugers 1000 ferner zum Fixieren und Positionieren des Vakuumsaugers an der Konsole verwendet. Hierfür wird der im Betrieb des Vakuumsaugers 1000 erzeugte Unterdruck der elektrischen Vakuumpumpe 114 über das zumindest eine (geöffnete) Magnetventil 134 zu der Oberfläche der Konsole geleitet. Somit kann der Vakuumsauger 1000 an der Konsole befestigt werden.

Ferner ist ein Luftauslassanschluss (nicht dargestellt) in dem Vakuumsauger ausgebildet, der mit der elektrischen Vakuumpumpe 114 in Verbindung steht, so dass die erzeugte Abluft der elektrischen Vakuumpumpe abgeführt werden kann. Auf diese Weise kann die erzeugte Abluft der elektrischen Vakuumpumpe genützt werden, um zusätzliche Funktionen an dem Festhaltemittel (wie z.B. Versorgen von Pneumatikaktoren, Bereitstellen von Druckluft zum Ablasen/Reinigen der Bearbeitungsmaschine) vorzusehen.

Obwohl im Rahmen der vorliegenden Ausführungsform nicht beschrieben, ist der Vakuumsauger 100 an der oben beschriebenen Konsole 10 oder Bearbeitungsmaschine 1000 anbringbar bzw. anwendbar.

Obwohl die vorliegende Erfindung anhand bevorzugter Ausführungsbeispiele vorliegend beschrieben wurde, ist sie nicht darauf beschränkt, sondern auf vielfältige Weise modifizierbar.

## Patentansprüche

1. Konsole (10) für eine Bearbeitungsmaschine (1000) zum Bearbeiten von Werkstücken, die vorzugsweise zumindest abschnittsweise aus Holz, holzhaltigem Werkstoff, Verbundwerkstoff oder Kunststoff bestehen, aufweisend:
eine Oberseite (11), die zum Aufnehmen von zumindest einem Festhaltemittel (40), insbesondere Vakuumsauger, auf welchem ein zu fixierendes Werkstück auflegbar ist und vom Festhaltemittel mittels Unterdruck haltbar ist, eingerichtet ist, wobei
die Konsole durch auf der Oberseite (11) ausgebildete Kupplungen (13) mit dem zumindest einen Festhaltemittel in druckdichte Verbindung bringbar ist, **dadurch gekennzeichnet, dass**
die Konsole zumindest eine Unterdruckerzeugungsvorrichtung (30) aufweist, die in druckdichter Verbindung mit den Kupplungen an oder in oder in der Nähe der Konsole angeordnet ist, um das zumindest eine Festhaltemittel mit Unterdruck zu versorgen.

2. Konsole nach Anspruch 1, **dadurch gekennzeichnet, dass**
die Konsole zumindest eine Führungsvorrichtung (12) aufweist, die zum Bewegen und Arretieren der Konsole in einer Richtung (X) eines Maschinenbetts (101) der Bearbeitungsmaschine (100) eingerichtet ist,

3. Konsole nach Anspruch 1 oder 2, **dadurch gekennzeichnet, dass**
die Konsole in ein Segment oder eine Vielzahl von Segmenten mit entsprechenden Kupplungen aufgeteilt ist, wobei
zumindest eine Unterdruckerzeugungsvorrichtung in oder an dem Segment oder der Vielzahl von Segmenten angeordnet ist, und
die zumindest eine Unterdruckerzeugungsvorrichtung in druckdichter Verbindung mit den entsprechenden Kupplungen steht.

4. Konsole nach einem der vorstehenden Ansprüche, **dadurch gekennzeichnet, dass**
zumindest ein Luftauslassanschluss (15) in der Konsole ausgebildet ist, der mit der zumindest einen Unterdruckerzeugungsvorrichtung (30) in Verbindung steht und zum Abführen von erzeugter Abluft der zumindest einen Unterdruckerzeugungsvorrichtung (30) eingerichtet ist.

5. Konsole nach einem der vorstehenden Ansprüche, **dadurch gekennzeichnet, dass**
die zumindest eine Unterdruckerzeugungsvorrichtung eine elektrische Vakuumpumpe ist.

6. Konsole nach einem der vorstehenden Ansprüche, **dadurch gekennzeichnet, dass**
die Konsole so gestaltet ist, dass die Leistung der zumindest einen Unterdruckerzeugungsvorrichtung zum Einstellen des Unterdrucks steuerbar ist.

7. Konsole nach einem der vorstehenden Ansprüche, **dadurch gekennzeichnet, dass** die zumindest eine Unterdruckerzeugungsvorrichtung der Konsole über eine Verbindung, insbesondere Schlauchverbindung, zum Leiten von Unterdruck mit einer oder mehreren weiteren Konsolen verbindbar ist und diese Verbindung bevorzugt so gestaltet ist, dass der von der zumindest einen Unterdruckerzeugungsvorrichtung erzeugte Unterdruck gezielt zwischen der Konsole und der/den weiteren Konsole/n steuerbar ist.

8. Konsole nach einem der vorstehenden Ansprüche, **dadurch gekennzeichnet, dass** die Konsole zumindest einen Unterdruckspeicher aufweist, in dem ein Unterdruck mittels der zumindest einen Unterdruckerzeugungsvorrichtung (30) aufbringbar ist und der so gestaltet ist, dass er den aufgebrachten Unterdruck speichert, wobei
der Unterdruckspeicher an oder in oder in der Nähe der Konsole angeordnet ist und in druckdichte Verbindung mit den Kupplungen bringbar ist, um das zumindest eine Festhaltemittel mit Unterdruck zu versorgen.

9. Festhaltemittel (100), insbesondere Vakuumsauger, zum Halten eines Werkstücks für eine Bearbeitungsmaschine (1000) zum Bearbeiten von Werkstücken, die vorzugsweise zumindest abschnittsweise aus Holz, holzhaltigem Werkstoff, Verbundwerkstoff oder Kunststoff bestehen, aufweisend:
eine erste Seite (120), die dem zu fixierenden Werkstück zugewandt ist und die eine erste Spannfläche (122) aufweist, auf der zumindest ein Abschnitt des zu fixierendes Werkstücks auflegbar und mittels Unterdruck haltbar ist,
eine zweite Seite (130), die eine zweite Spannfläche (132) aufweist, über welche das Festhaltemittel an einer Konsole der Bearbeitungsmaschine (1000) anbringbar ist, **dadurch gekennzeichnet, dass**
das Festhaltemittel zumindest eine Unterdruckerzeugungsvorrichtung (114) aufweist, die an oder in dem Festhaltemittel (100) angeordnet ist.

10. Festhaltemittel (100) nach Anspruch 9, **dadurch gekennzeichnet, dass**
die zumindest eine Unterdruckerzeugungsvorrichtung (114) durch zumindest eine an der ersten Spannfläche (122) ausgebildeten Verbindungsstelle (124) mit zumindest einem Abschnitt des Werkstücks in druckdichte Verbindung bringbar ist, um den Abschnitt des Werkstücks mittels Unterdruck zu fixieren.

11. Festhaltemittel (100) nach einem der Ansprüche 9 oder 10, **dadurch gekennzeichnet, dass**
die zumindest eine Unterdruckerzeugungsvorrichtung (114) durch zumindest eine an der zweiten Spannfläche (132) ausgebildeten Verbindungsstelle (134) mit der Konsole in druckdichte Verbindung bringbar ist, um das Festhaltemittel mittels Unterdruck an der Konsole zu fixieren.

12. Festhaltemittel (100) nach einem der Ansprüche 9 bis 11, **dadurch gekennzeichnet, dass**
das Festhaltemittel ferner einen Unterdruckspeicher aufweist, in dem ein Unterdruck mittels der zumindest einen Unterdruckerzeugungsvorrichtung (114) aufbringbar ist und der so gestaltet ist, dass er den aufgebrachten Unterdruck speichert,
wobei der Unterdruckspeicher durch zumindest eine an der ersten Spannfläche (122) ausgebildeten Verbindungsstelle (124) mit zumindest einem Abschnitt des Werkstücks in druckdichte Verbindung bringbar ist, um den Abschnitt des Werkstücks mittels Unterdruck zu fixieren.

13. Festhaltemittel (100) nach einem der Ansprüche 9 bis 12, **dadurch gekennzeichnet, dass** das Festhaltemittel aufweist:
eine Schnittstelle, die zum Versorgen der zumindest einen Unterdruckerzeugungsvorrichtung (114) mit Energie und/oder Steuerinformation eingerichtet ist, wobei
die Schnittstelle vorzugsweise an der zweiten Seite ausgebildet ist und so gestaltet ist, dass sie über die Konsole mit Energie und/oder Steuerinformation versorgbar ist.

14. Festhaltemittel (100) nach einem der Ansprüche 9 bis 13, **dadurch gekennzeichnet, dass** das Festhaltemittel aufweist:
einen Energiespeicher zum Versorgen der zumindest einen Unterdruckerzeugungsvorrichtung (114) mit Energie, und
eine die Schnittstelle, über welche dem Energiespeicher Energie zuführbar ist und die in dem Festhaltemittel ausgebildet ist.

15. Festhaltemittel (100) nach einem der Ansprüche 9 bis 14, **dadurch gekennzeichnet, dass**
zumindest ein Luftauslassanschluss in dem Festhaltemittel ausgebildet ist, der mit der zumindest einen Unterdruckerzeugungsvorrichtung (114) in Verbindung steht und zum Abführen von erzeugter Abluft der zumindest einen Unterdruckerzeugungsvorrichtung (114) eingerichtet ist.

16. Festhaltemittel (100) nach einem der Ansprüche 9 bis 15, **dadurch gekennzeichnet, dass**
die Unterdruckerzeugungsvorrichtung eine elektrische Vakuumpumpe ist.

17. Bearbeitungsmaschine (1000) zum Bearbeiten von Werkstücken, die vorzugsweise zumindest abschnittsweise aus Holz, holzhaltigem Werkstoff, Verbundwerkstoff oder Kunststoff bestehen, aufweisend:
Konsole nach einem der Ansprüche 1 bis 8 und/oder
Festhaltemittel nach einem der Ansprüche 9 bis 16.
